# EUROPEAN PATENT APPLICATION

(11) **EP 4 768 735 A1**
(43) Date of publication of application: **01.07.2026**
(21) Application number: 25222330.0
(22) Date of filing: 10.12.2025
(51) Int. Cl.: F04D 25/16, F04D 29/42

(54) **AIR BLOWING APPARATUS WITH MULTIPLE FANS AND HOUSINGS FOR RESPECTIVE OUTPUT FUNCTIONS**

(30) Priority: 23.12.2024 US 202463737895 P
(71) Applicant: MTD Products Inc, Valley City, OH 44280-2711 (US)
(72) Inventor: MAGGARD, Jay, Valley City, 44280 (US)
(74) Representative: SBD IPAdmin

(57) **Abstract**

An air blowing apparatus has a primary fan housing, primary air fan and primary output combined with a secondary fan housing, secondary air fan and secondary output generating multiple airflows with distinct fluid dynamic characteristics. The primary air fan and secondary air fan can be powered by any suitable prime mover, including an electric motor, a pneumatic motor, a hydraulic motor, a combustion engine, and others. The secondary housing, fan and output can generate a secondary airflow having a different fluid dynamic characteristic than provided by the primary housing, fan and output. In aspects of the disclosed embodiments, the secondary airflow can have a relatively high air speed, and the primary airflow can have a relatively high air volume.

## Description

### INCORPORATION BY REFERENCE

U.S. Patent No. 10,299,642B2 issued May 28, 2019, U.S. Patent No. 10,935,039B2 issued March 2, 2021, U.S. Patent Application serial No. 15/174,840 filed June 6, 2016, U.S. Patent Application serial No. 15/805,465 filed November 7, 2017, U.S. Patent Application serial No. 18/431,557 entitled AIR BLOWING APPARATUS WITH AUXILIARY FAN HOUSING AND AUXILIARY BAFFLE and filed February 02, 2024, and U.S. Provisional Patent Application No. 63/525,778 entitled AIR BLOWING APPARATUS HAVING MULTIPLE AIRLOW OUTPUTS WITH A DIFFERENT FLUID DYNAMIC CHARACTERISTIC and filed July 10, 2023, are each hereby incorporated by reference herein in their respective entireties and for all purposes.

### FIELD OF DISCLOSURE

The disclosed subject matter pertains to apparatuses for powered air blowing equipment, for instance, a hand-held air blowing apparatus with auxiliary fan housing and operator selectable auxiliary baffle.

### BACKGROUND

It is known that in many applications, such as in the agricultural field, when cleaning of streets and pavements or grasslands is concerned, as well as for other similar application fields, portable blowing apparatuses are used which are adapted to produce a directed air flow to propel debris and loose material in a desired direction.

In these applications, a blowing apparatus generally might have a power source moving a centrifugal fan wheel adapted to generate a substantially radial air flow. The fan wheel is externally surrounded by a volute header adapted to convey the air flow from radial direction to linear direction. Part of the delivery air flow is deviated from the provided main use and conveyed towards the engine sometimes contained at least partly in a casing, for cooling of the engine itself.

While improving engine performance, deviation of air from the fan wheel to cooling reduces optimal yield of air delivery to the directed air flow output from the blowing apparatus. The proportion of air flow generated by the fan wheel to that directed to perform desired work of propelling debris and loose material is likewise reduced. Where power consumption is not of concern, a desired air output can be achieved simply by increasing engine size or fan wheel size and geometry to generate a larger amount of radial air flow from the fan wheel. Where power efficiency is of concern, however, this may not be a preferred solution to achieving optimal yield of linear air flow, particularly when the engine size or fan wheel size/geometry is constant.

Accordingly, further efforts are ongoing to develop an air blowing apparatus that can optimize linear air flow output and provide increased air flow performance while reducing power consumption or operating with improved power efficiency.

### BRIEF SUMMARY

The following presents a simplified summary in order to provide a basic understanding of some aspects of the disclosure. This summary is not an extensive overview of the disclosure. It is not intended to identify key/critical elements or to delineate the scope of the disclosure. Its sole purpose is to present some concepts of the disclosure in a simplified form as a prelude to the more detailed description that is presented later.

Various embodiments of the present disclosure provide an air blowing apparatus having a primary fan housing, air fan and output and having a secondary fan housing, air fan and output. The primary air fan and secondary air fan can be powered by an electric motor and rechargeable battery(ies), in some embodiments, although the disclosure is not limited to such embodiments. In various aspects of the disclosed embodiments, the secondary housing, fan and output can generate a secondary airflow having a different fluid dynamic characteristic than provided by the primary housing, fan and output. In aspects of the disclosed embodiments, the secondary air flow can be a relatively high speed air output, and the primary air flow can be a relatively high volume air output. In a further aspect, the primary air fan and secondary air fan can rotate about a common axis and can be driven by a common drive mechanism. In yet another aspect, an air intake to the primary fan housing and secondary fan housing can be a common air intake by way of a common air intake housing. In still further aspects, a power source can be located within or adjacent to the air intake housing and can be air-cooled at least in part by the air intake. In another aspect, the primary fan housing can have a first interior volume and the secondary fan housing can have a second interior volume. In yet other aspects, the primary fan can have a first fan blade width and the secondary fan can have a second fan blade width.

Additional embodiments of the present disclosure provide for an air blowing apparatus. The air blowing apparatus can comprise a first fan coupled to a drive mechanism that defines an axis of rotation for the first fan, and a first fan housing enclosing the first fan and that defines a space within which the first fan rotates in response to a rotational force applied to the drive mechanism. Further, the air blowing apparatus can comprise a motor coupled to the drive mechanism that, when activated, generates and applies the rotational force to the drive mechanism causing the first fan to rotate within the first fan housing. Still further, the air blowing apparatus can comprise an intake in fluid communication with the first fan housing for receiving air external to the air blowing apparatus into the first fan housing, the air interacting with the first fan, wherein rotation of the first fan within the first fan housing while in communication with the air generates a first dynamic air, and a first output fluidly coupled with the first fan housing that receives the first dynamic air and directs the first dynamic air to a first blower exhaust port. In addition to the foregoing, the air blowing apparatus can comprise a second fan contained within a second fan housing in fluid communication with the intake for receiving second air external to the air blowing apparatus into the second fan housing, the second air interacting with the second fan, wherein rotation of the second fan within the second fan housing while in communication with the second air generates a second dynamic air. Moreover, the air blowing apparatus can comprise a second output fluidly coupled with the second fan housing that receives the second dynamic air and directs the second dynamic air to a second blower exhaust port.

In further embodiments, disclosed is a hand-held air blowing apparatus having multiple air output ports. The hand-held air blowing apparatus can comprise a first output port having a first output surface area and a second output port having a second output surface area, wherein the second output surface area is smaller than the first output surface area. Still further, the hand-held air blowing apparatus can comprise a first fan rotatable within a first housing coupled to the first output port, a second fan rotatable within a second housing coupled to the second output port and a motor that, when activated, provides mechanical power to the first fan and to the second fan. Furthermore, the hand-held air blowing apparatus can comprise air flow generation means responsive to the mechanical power output by the motor and configured to: generate a first air motion within the first housing and expelled via the first output port as a first airflow output and generate a second air motion within the second housing and expelled via the second output port as a second airflow output, wherein the second airflow output has a fluid dynamic metric different from the first airflow output.

According to an aspect of the invention, there is provided an air blowing apparatus. The apparatus can comprise a first fan coupled to a drive mechanism that defines an axis of rotation for the first fan. The apparatus can further comprise a first fan housing enclosing the first fan and that defines a space within which the first fan rotates in response to a rotational force applied to the drive mechanism. The apparatus can further comprise a motor coupled to the drive mechanism that, when activated, generates and applies the rotational force to the drive mechanism causing the first fan to rotate within the first fan housing. The apparatus can further comprise an intake in fluid communication with the first fan housing for receiving air external to the air blowing apparatus into the first fan housing, the air interacting with the first fan, wherein rotation of the first fan within the first fan housing while in communication with the air generates first dynamic air. The apparatus can further comprise a first output fluidly coupled with the first fan housing that receives the first dynamic air and directs the first dynamic air to a first blower exhaust port. The apparatus can further comprise a second fan contained within a second fan housing in fluid communication with the intake for receiving second air external to the air blowing apparatus into the second fan housing, the second air interacting with the second fan, wherein rotation of the second fan within the second fan housing while in communication with the second air generates second dynamic air. The apparatus can further comprise a second output fluidly coupled with the second fan housing that receives the second dynamic air and directs the second dynamic air to a second blower exhaust port.

The second fan may be coupled to the drive mechanism and both the first fan and the second fan may rotate in response to the rotational force applied to the drive mechanism.

The motor may be positioned at least in part within the intake. The motor may be physically adjacent to the air received into the intake.

The first fan may have a first fan blade length that is shorter than a second fan blade length of the second fan. The first fan may have a first fan blade width that is wider than a second fan blade width of the second fan. The first fan housing may have a first volume larger than a second volume of the second fan housing.

The first dynamic air may facilitate a first volumetric flow at the first output that is higher than a second volumetric flow at the second output facilitated by the second dynamic air. The second volumetric flow at the second output may have a higher air speed than the first volumetric flow at the first output.

The motor may be an electric motor. The air blowing apparatus may comprise a rechargeable battery providing electric power to the electric motor. The air blowing apparatus may further comprise a motor control that when engaged, activates the motor to generate and apply the rotational force to the drive mechanism.

The air blowing apparatus may further comprise an operator handle rigidly secured to the air blowing apparatus and to which the motor control is mounted.

The air blowing apparatus may further comprise a forearm brace secured to the operator handle that facilitates transfer of force generated by the air blowing apparatus in response to the rotation of the first fan and the rotation of the second fan to the forearm brace.

The first output may include a first output surface area, the second output may include a second output surface area, and the first output surface area may be larger than the second output surface area. The first output surface area may be more than two times larger than the second output surface area.

Both the first fan and the second fan may rotate about the axis of rotation in response to the rotational force applied to the drive mechanism.

In an aspect of the invention, there is provided a hand-held air blowing apparatus having multiple air output ports. The apparatus can comprise a first output port having a first output surface area. The apparatus can further comprise a second output port having a second output surface area. The second output surface area can be smaller than the first output surface area. The apparatus can further comprise a first fan rotatable within a first housing coupled to the first output port. The apparatus can further comprise a second fan rotatable within a second housing coupled to the second output port. The apparatus can further comprise a motor that, when activated, provides mechanical power to the first fan and to the second fan. The apparatus can further comprise airflow generation means responsive to the mechanical power output by the motor. The airflow generaion means can be configured to: generate first air motion within the first housing and expelled via the first output port as a first airflow output, and generate second air motion within the second housing and expelled via the second output port as a second airflow output. The second airflow output can have a fluid dynamic metric different from the first airflow output.

The first housing may be separated from the second output port. The second housing may be separated from the first output port.

The hand-held air blowing apparatus may further comprise a common air intake providing input airflow to both the first housing and the second housing. The motor may be positioned adjacent to the input airflow.

The first fan housing may have a first volume and the first fan may have a first fan blade length and a first fan tip-speed. The second fan housing may have a second volume and the second fan may have a second fan blade length and a second fan tip-speed. The first volume may be larger than the second volume. The first fan blade length may be shorter than the second fan blade length. The first fan tip-speed may be greater than the second fan tip-speed.

The hand-held air blowing apparatus may further comprise an operator handle secured to the hand-held air blowing apparatus. The apparatus may further comprise a motor activation mounted to the operator handle and configured to selectively activate and deactivate the motor in response to engagement and disengagement, respectively of the motor activation. The apparatus may further comprise a forearm brace secured to the operator handle and configured to distribute force generated in response to rotation of the first fan and the second fan at least partially along a length of the forearm brace.

To accomplish the foregoing and related ends, certain illustrative aspects of the disclosure are described herein in connection with the following description and the drawings. These aspects are indicative, however, of but a few of the various ways in which the principles of the disclosure can be employed. Other advantages and features of the disclosure will become apparent from the following detailed description of the disclosure when considered in conjunction with the drawings.

### BRIEF DESCRIPTION OF THE DRAWINGS

Figure 1 depicts an example multi-output portable air blower apparatus according to aspects of the present disclosure.
Figure 2 illustrates an exhaust-side view of the multi-output portable air blower apparatus illustrating further aspects of the present disclosure.
Figure 3 depicts a bottom-side view of the multi-output portable air blower apparatus to convey additional aspects disclosed herein.
Figure 4 illustrates a front view of the multi-output portable air blower apparatus in one or more other aspects of the disclosed embodiments.
Figure 5 depicts an example drawing of an intake-side view of the multi-output portable air blower apparatus and respective high air volume and high speed air.
Figure 6 illustrates an example interior fan housing and primary fan impeller and secondary fan impeller, in additional aspects of the disclosed embodiments.
Figure 7 depicts a side view of a high air speed fan housing interior and a high tip-speed air fan to illustrate additional aspects of the disclosed embodiments.
Figure 8 illustrates a side view of a high air volume fan housing interior and a high air volume fan to depict other aspects of the disclosed embodiments.
Figure 9 depicts an example portable air blower and operator handle and forearm brace in an additional aspect of the disclosed embodiments.
Figure 9A illustrates a diagram of a handheld air blower and operator handle in one or more additional aspects of the present disclosure.
Figure 9B depicts a perspective view of the handheld air blower and operator handle of Figure 9A in further disclosed aspects.
Figure 10 illustrates a close-up side view of the example operator handle.
Figure 11 depicts a close-up perspective top view of the example operator handle.
Figure 12 depicts a close-up rear view of the example operator handle.

It should be noted that the drawings are diagrammatic and not drawn to scale. Relative dimensions and proportions of parts of the figures have been shown exaggerated or reduced in size for the sake of clarity and convenience in the drawings. The same reference numbers are generally used to refer to corresponding or similar features in the different embodiments, except where clear from context that same reference numbers refer to disparate features. Accordingly, the drawings and description are to be regarded as illustrative in nature and not as restrictive.

While embodiments of the disclosure pertaining to a multi-output portable air blower and operator handle apparatus are described herein, it should be understood that the disclosed machine(s), apparatus and powered devices are not so limited and modifications may be made without departing from the scope of the present disclosure. The scope of the machines, apparatus and power devices for a multi-output portable air blower(s) is defined by the appended claims, and all machines, apparatuses and devices that come within the meaning of the claims, either literally or by equivalence, are intended to be embraced therein.

### DETAILED DESCRIPTION

As utilized herein, the term "substantially" and other relative terms or terms of degree (e.g., about, approximately, substantially, near and so forth) are intended to have the meaning specified explicitly in conjunction with their use herein, or a meaning which can be reasonably inferred by one of ordinary skill in the art, or a reasonable variation of a specified quality(ies) or quantity(ies) that would be understood by one of ordinary skill in the art by reference to this entire specification (including the knowledge of one of ordinary skill in the art as well as material incorporated by reference herein). As an example, a term of degree could refer to reasonable manufacturing tolerances about which a specified quality or quantity could be realized with fabrication equipment. Thus, as a specific illustration, though non-limiting, for an element of an apparatus expressly identified as having a dimension of about 50 centimeters (cm), the relative term "about" can mean reasonable variances about 50cm that one of ordinary skill in the art would anticipate the specified dimension of the element could be realized with commercial fabrication equipment, industrial fabrication equipment, laboratory fabrication equipment, or the like, and is not limited to a mathematically precise quantity (or quality). In other examples, a term of degree could mean a variance of +/- 0-3%, +/- 0-5%, or +/- 0-10% of an expressly stated value, where suitable to one of ordinary skill in the art to achieve a stated function or feature of an element disclosed herein. In still other examples, a term of degree could mean any suitable variance in quality(ies) or quantity(ies) that would be suitable to accomplish an explicitly disclosed function(s) or feature(s) of a disclosed element. Accordingly, the subject specification is by no means limited only to specific qualities and quantities disclosed herein, but includes all variations of a specified quality(ies) or quantity(ies) reasonably conveyed to one of ordinary skill in the art by way of the context disclosed herein.

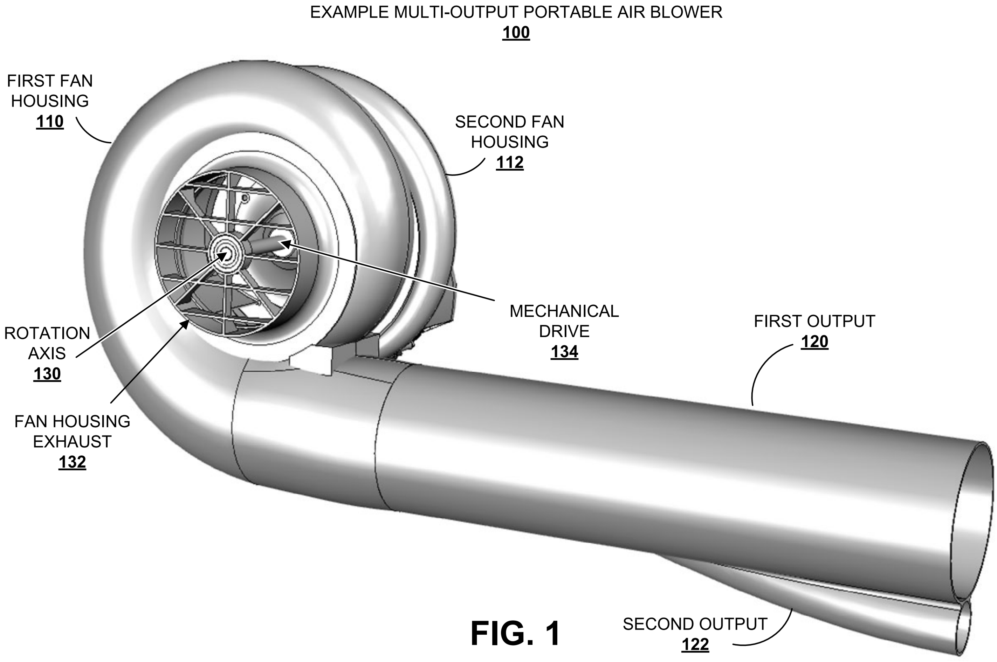

Figure 1 illustrates an example multi-output portable air blower apparatus 100 according to various aspects of the present disclosure. Air blower apparatus 100 includes a first fan housing 110 and a second fan housing 112 respectively coupled to a first output 120 and a second output 122. Also shown is an example fan housing exhaust 132, a rotation axis 130 and an example mechanical drive 134 for the air blower apparatus 100.

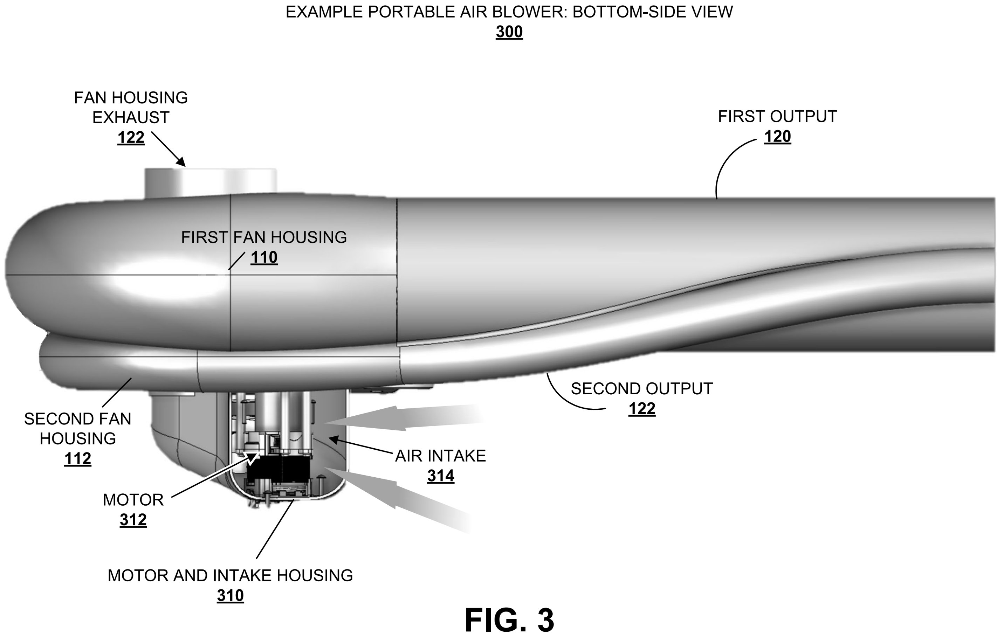

As shown, air blower apparatus 100 can comprise a first output 120 (also referred to as a high volume output, a high air volume output, or a high cubic feet per meter (CFM) output) secured to first fan housing 110, and a second output 122 (also referred to as a high speed output, a high flow rate output, or alternatively a mile per hour (MPH) output) secured to second fan housing 112. Second fan housing 112 can generate a relatively high speed air at second output 122 to supplement a relatively high volume air generated by first fan housing 110 and output at first output 120. The high speed air can provide relatively higher energy air to effect movement of debris, dirt, leaves, grass and vegetation clippings, and the like on a surface in front of air blower apparatus 100. A power source for air blower apparatus 100 can be an electric motor *(e.g.,* see Figure 3, *infra),* a combustion engine, a hydraulic motor, a pneumatic motor, or the like. In at least some embodiments, a suitable electric motor can be powered by an electric power source whether a direct current (DC) power source (e.g., rechargeable battery(ies)) or alternating current (AC) power source (e.g., electric cord coupled to a fixed AC power source, such as an AC outlet, *etc.*)*.* However, the subject disclosure is not so limited, and in other embodiments the power source can be a suitable combination of any of the foregoing.

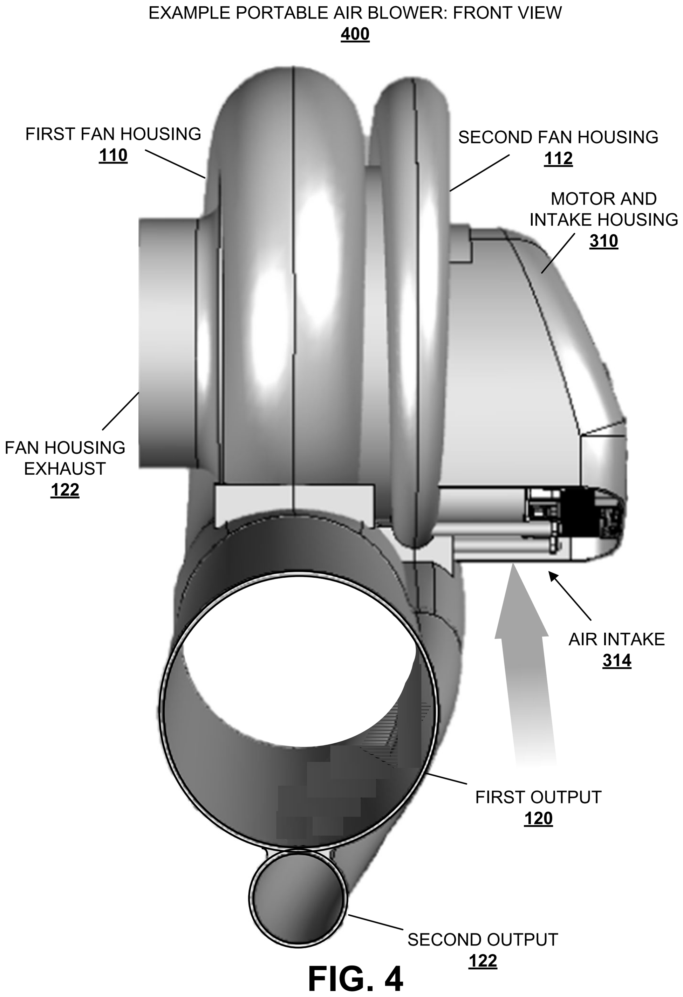

First output 120 can define a first output surface area and second output 122 can have a second output surface area (see, *e.g.,* Figure 4, *infra).* In various aspects of the disclosed embodiments, the second surface area can be smaller than the first surface area. In some disclosed aspects, first output 120 can have a substantially constant first output surface area along a length of first output 120, second output 122 can have a substantially constant second output surface area along a length of second output 122, or a combination of both, in at least some aspects of the disclosed embodiments.

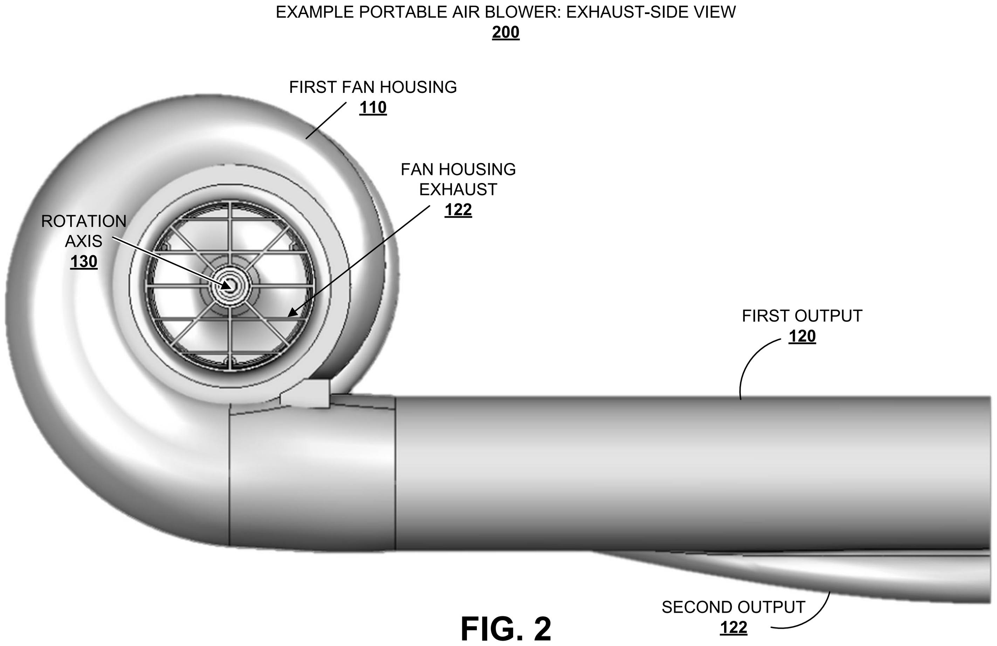

Figure 2 illustrates an exhaust side view 200 of air blower apparatus 100 according to further embodiments of the present disclosure. Exhaust side view 200 shows rotation axis 130 approximately centered within fan housing exhaust 122. In other aspects of the disclosed embodiments, fan housing exhaust 122 can be located at a different portion of first fan housing 110 (or on second fan housing 112) and need not be centered on rotation axis 130. In other aspects of the disclosed embodiments, air blower apparatus 100 can have multiple fan housing exhausts 122 in different locations.

First output 120 is shown in relative position to second output 122. As shown, second output 122 providing a high speed air output can be beneath first output 120 providing a high volume air output. This relative orientation can facilitate providing relatively higher energy air output toward ground material, to lift or dislodge that ground material upward into the high volume air output. The high volume air output can then facilitate efficient movement of lifted material above the ground. The subject disclosure is not limited to the relative position of first output 120 with respect to second output 122 as shown, and second output 122 can be positioned off-center from the bottom of first output 120, on a left or right side of first output 120, above first output 120, and so on.

Figure 3 illustrates a bottom-side view 300 of air blower apparatus 100. Bottom-side view 300 shows a motor and intake housing 310 of air blower apparatus 100. Motor and intake housing 310 can be on an opposite side of air blower apparatus 100 from fan housing exhaust 122 in one or more embodiments, whereas in other embodiments motor and intake housing 310 can be positioned on a different location of air blower apparatus 100.

A motor can be positioned at least in part inside motor and intake housing 310. In the embodiment shown in Figure 3, motor 312 can be positioned immediately adjacent to air intake 314 into motor and intake housing 310. In this embodiment, air intake 314 can serve to cool motor 312 while motor 312 is in operation. In other embodiments, motor 312 can be positioned partially within motor and intake housing 310, or can be positioned outside motor and intake housing 310 in still other embodiments.

Figure 4 illustrates a front-side view 400 of air blower apparatus 100, in further embodiments of the present disclosure. Front-side view 400 of air blower apparatus 100 shows relative surface area of the first output surface area of first output 120 against the second output surface area of second output 122. Front-side view 400 also depicts relative volume of first fan housing 110 and second fan housing 112. Interior volume of first fan housing 110 can be from about fifty (50) percent to about two hundred fifty (250) percent larger than second fan housing 112. Front-side view 400 also shows motor and intake housing 310 on an opposite side of air blower apparatus 100 from fan housing exhaust 122.

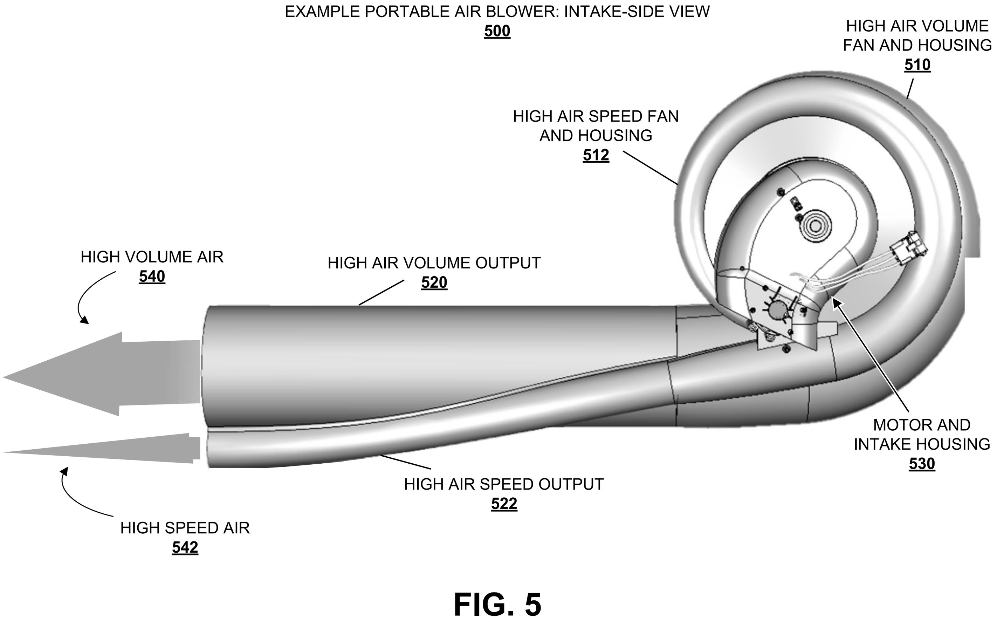

Figure 5 depicts an intake-side view 500 of a disclosed air blower apparatus 500 in alternative or additional embodiments of the present disclosure. Air blower apparatus 500 can have the characteristics of air blower apparatus 100 shown in Figures 1-4, *supra,* whereas in other embodiments air blower apparatus 500 can have some of the characteristics described for air blower apparatus 100, and can differ from air blower apparatus 100 in other characteristics. Intake-side view 500 shows high air volume fan and housing 510 at a far side of intake-side view 500 and a high air speed fan and housing 512 at a near side of intake-side view 500. Motor and intake housing 530 is shown with a motor positioned entirely (or substantially entirely) inside motor and intake housing 530. High air volume fan and housing 510 has a high air volume output 520 directing high volume air 540, and high air speed fan and housing 512 has a high air speed output 522 directing high speed air 542. As shown in Figure 5, high speed air 542 is positioned beneath high volume air 540, though in other embodiments high air speed output 522 can be positioned at a different location relative to high air volume output 520.

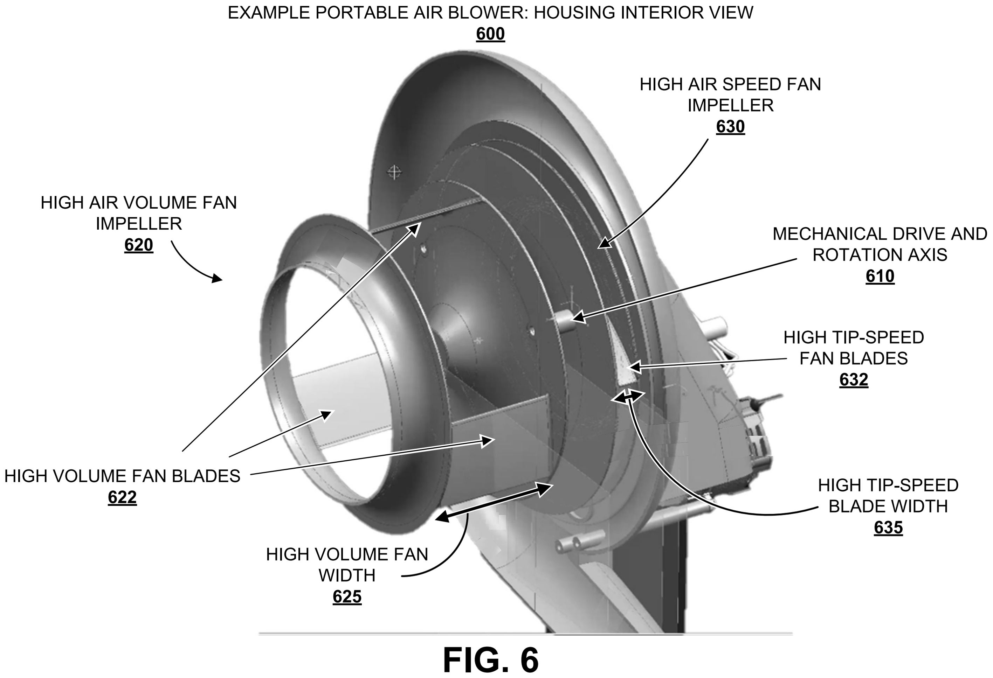

Figure 6 depicts an example interior housing view 600 of a disclosed portable air blower apparatus (*e.g*., air blower apparatus 100, air blower apparatus 500), with portions of the housing(s) made transparent. As is evident, interior housing view 600 includes both a high air volume fan impeller 620 and a high air speed fan impeller 630, as shown. High air volume fan impeller 620 can include a plurality of high volume fan blades 622 and is rotatable about a mechanical drive and rotation axis 610. High volume fan blades 622 define a high volume fan width 625 within a high volume housing portion of interior housing view 600.

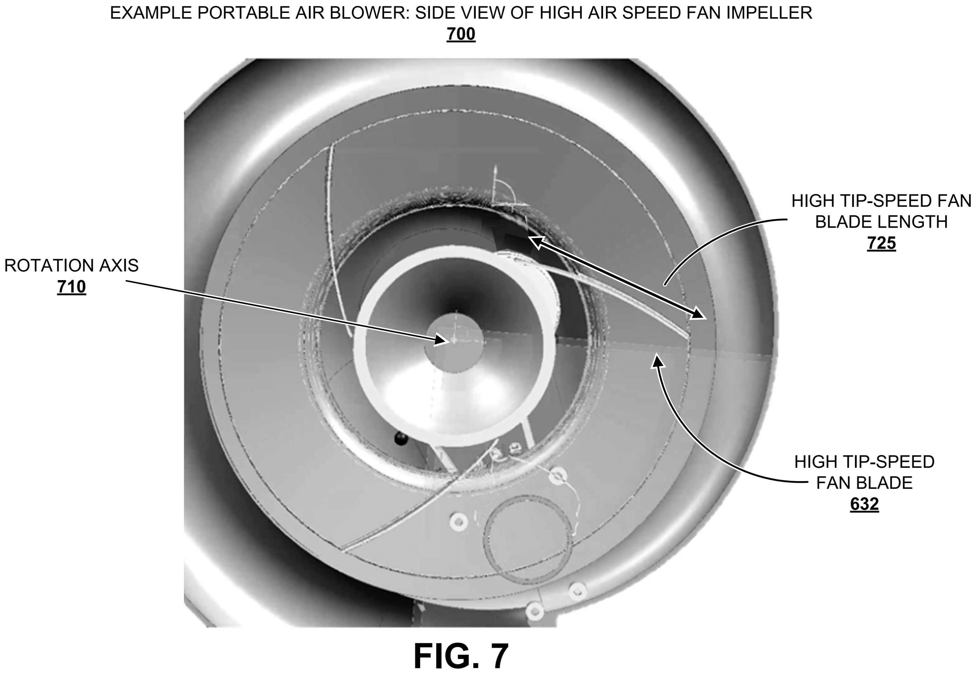

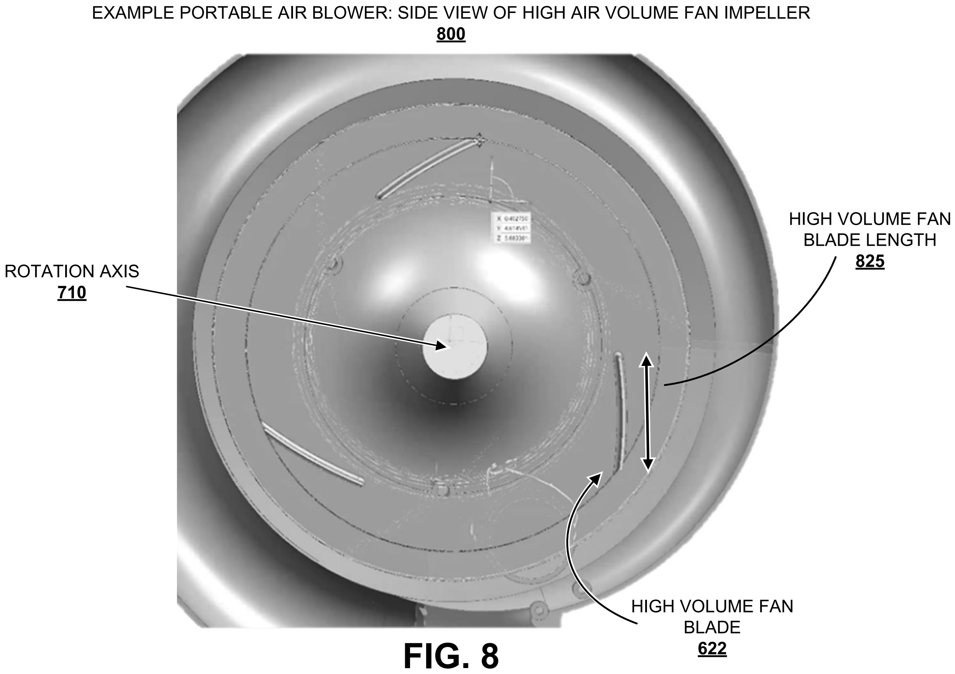

High air speed fan impeller 630 includes a plurality of fan blades having high tip-speed (in operation) relative to high volume fan blades 622 within a high speed housing portion of interior housing view 600. The higher tip-speed of high tip-speed fan blades 632 can result from a longer blade length (*e.g.,* see Figures 7 and 8, *infra*) of high tip-speed fan blades 632 compared with high volume fan blades 622. This can be convenient where high air speed fan impeller 630 and high air volume fan impeller 620 are rotated by a common mechanical drive and rotation axis 610, as shown in Figure 6. High tip-speed fan blades 632 define a high tip-speed blade width 635 in such embodiment(s), that is smaller than high volume fan width 625.

In alternative embodiments (not depicted) separate mechanical drives (on a common rotation axis, or a separate rotation axis where suitable) can rotate high air speed fan impeller 630 separately from high air volume fan impeller 620. In such embodiments, a first rotational speed transfer mechanism can output a first rotation speed to high air volume fan impeller 620 and a second rotational speed transfer mechanism can output a second (larger) rotation speed to high air speed fan impeller 630 in response to mechanical power output by a motor (*e.g.,* motor 312 of Figure 3, *supra*)*.* The rotational speed transfer mechanisms can be implemented with different gear ratios (in a driveshaft-gear or multi-gear transfer mechanism), pulley width ratios (in a belt and pulley(s) transfer mechanism), or other suitable mechanism for providing a relatively high rotational speed to high air speed fan impeller 630 and relatively low rotational speed to high air volume fan impeller 620.

When rotated in response to mechanical power output by a motor (*e.g*., motor 310), high air volume fan impeller 620 can generate first air output within a high air volume housing portion of interior housing view 600 (*e.g.,* high air volume fan and housing 510) to be output through a high air volume output coupled to the high air volume portion of interior housing view 600. This creates the high volume air 540 shown in Figure 5*, supra.* Similarly, high air speed fan impeller 630 can generate second air output within a high air speed portion of interior housing view 600 (*e.g.,* high air speed fan and housing 512) to be output through a high air speed output coupled to the high air speed portion of interior housing view 600. This creates the high speed air 542 shown in Figure 5.

In aspects of the disclosed embodiments, the high air volume housing portion of interior housing view 600 can be partially isolated from the high air speed housing portion. This can limit exchange of air between the high air volume housing portion and the high air speed housing portion. The high air volume housing portion and high air speed housing portion can, in one or more embodiments, be partially connected at a common air intake to the housing interior, so that air received from the air intake can be supplied to the high air volume housing portion and the high air speed housing portion of the housing interior. In other embodiments, the high air volume housing portion can have a first air intake and the high air speed housing portion can have a second air intake, and the first and second air intakes can be isolated from each other to mitigate or prevent air exchange between the high air volume housing portion and the high air speed housing portion.

Figure 7 depicts an interior side view 700 of high air speed fan impeller 630 of a disclosed air blower apparatus, in still further embodiments of the present disclosure. Interior side view 700 depicts high air speed fan impeller 630 as centered on a rotation axis 710. A high tip-speed fan blade 632 is shown having high tip-speed fan blade length 725. High tip-speed fan blade length 725 can be larger than a high volume fan blade length 825 of a high volume fan blade 622 also centered on rotation axis 710, as shown in interior side view 800 of high air volume fan impeller 620 of Figure 8.

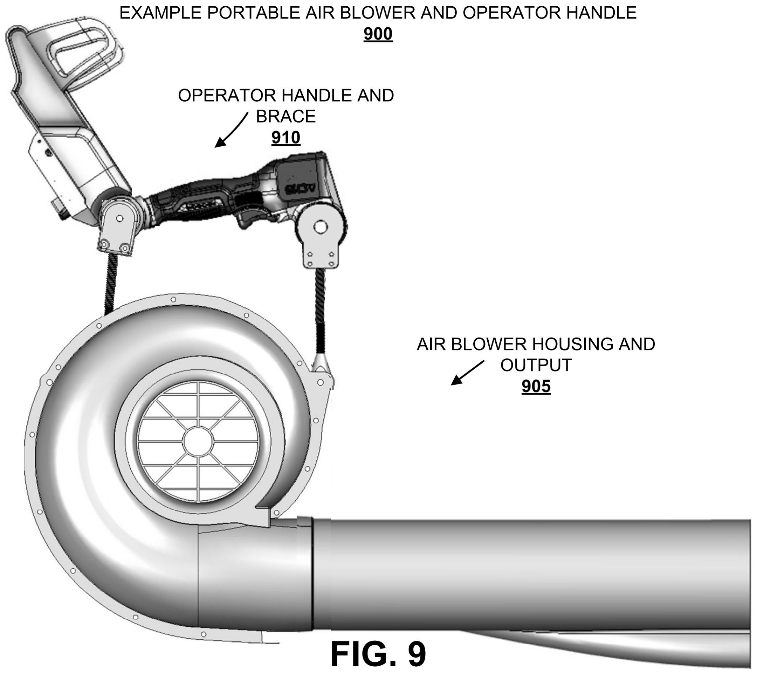

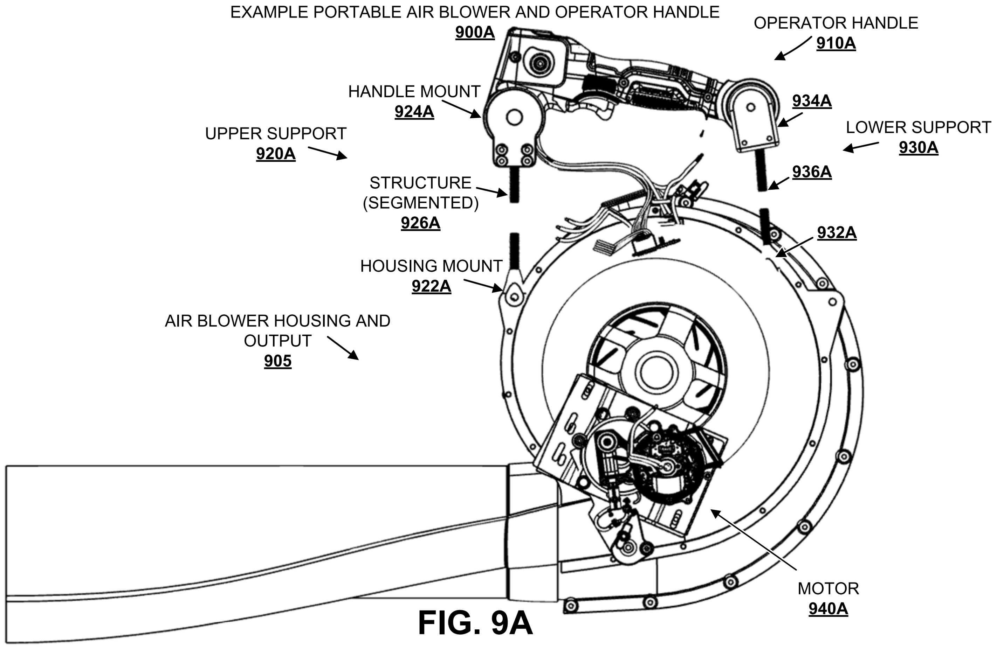

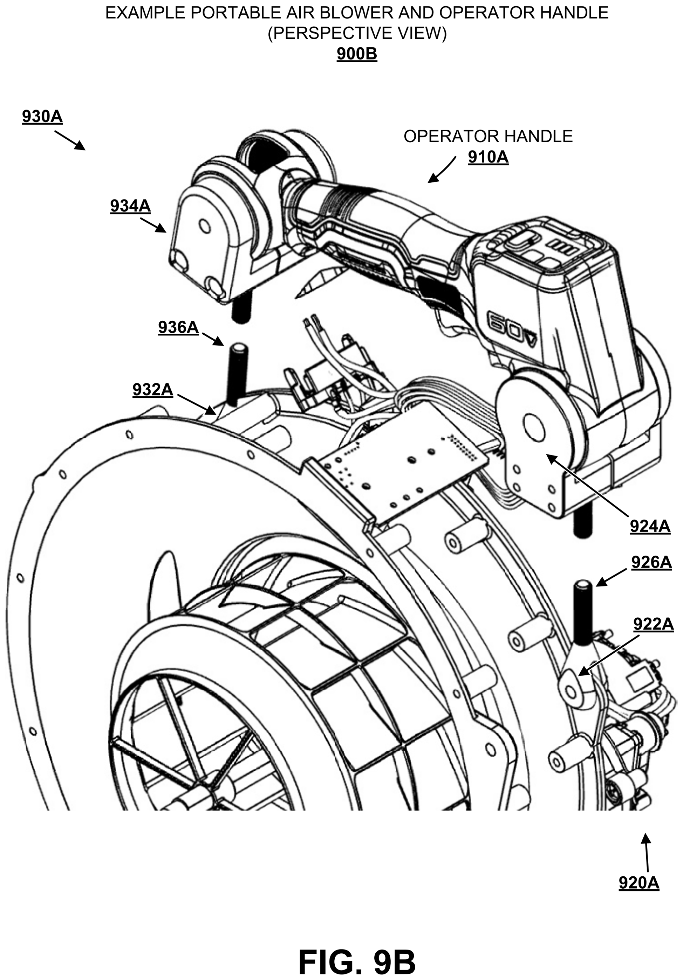

Figure 9 illustrates an example air blower with operator handle 900 according to further embodiments of the present disclosure. Depicted is an air blower housing and output 905, and an operator handle and brace 910. Operator handle and brace 910 can be fixedly secured to air blower housing and output 905, allowing an operator grasping operator handle and brace 910 to move and direct air blower housing and apparatus 905 by moving, directing, turning, *etc.,* operator handle and brace 910.

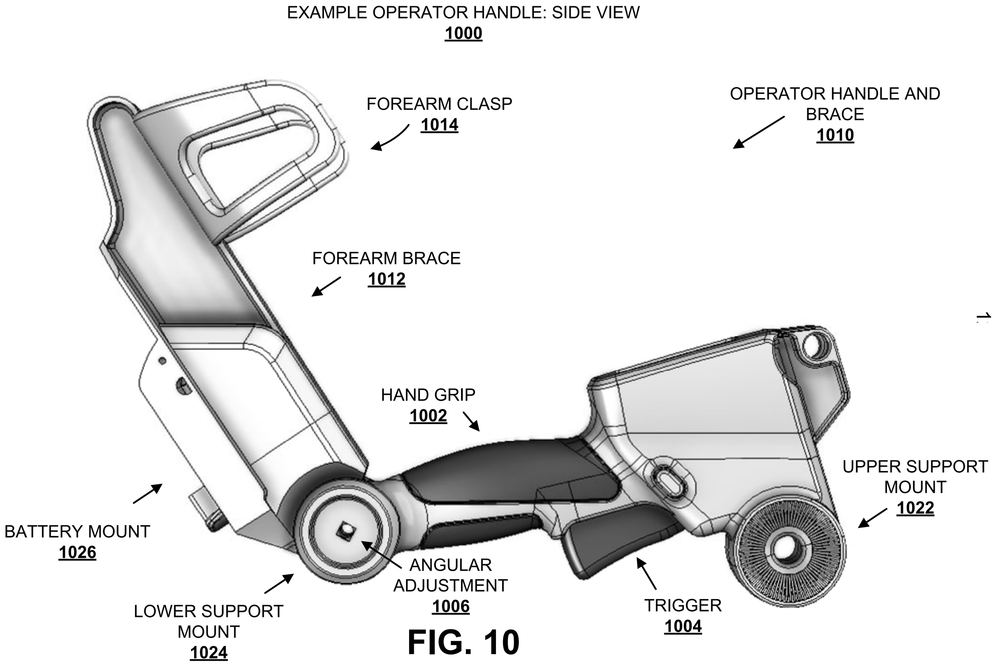

Figure 9A illustrates an example portable air blower and operator handle 900A in an additional aspect(s) of the disclosed embodiments. Operator handle 900A (which can include forearm brace 1012 in some embodiments, though not depicted; *e.g.,* see Figure 10, *infra*) is shown secured to air blower housing and output 905 by way of an upper support 920A and a lower support 930A. Upper support 920A includes a handle mount 924A that secures upper support 920A to an upper support mount (*e.g.,* see Figure 10, *infra*)*,* and a housing mount 922A that secures upper support 920A to a first fastening point of air blower housing and output 905. Lower support 930A includes a lower handle mount 934A that secures lower support 930A to a lower support mount (*e.g.,* see Figure 10, *infra*) and a housing mount 932A that secures lower support 930A to a second fastening point of air blower housing and output 905. Figure 9B depicts a perspective view 900B of portable air blower and operator handle 900A. Perspective view 900B shows a clamp-style handle mount 924A and handle mount 934A. In addition, housing mount 922A is shown securing a structure support (shown segmented) 926A to a first fastening point on portable air blower and operator handle 900A. A second structure support (shown segmented) 936A securing operator handle 910A to a second fastening point on portable air blower and operator handle 900A is also shown.

Figure 10 depicts a closeup side view 1000 of operator handle and brace 910. Closeup side view 1000 shows an upper support mount 1022 and a lower support mount 1024 to secure operator handle and brace 910 to air blower housing and output 905. Upper mount support 1022 can have an adjustment mechanism to adjust an orientation angle of operator handle and brace 910 relative to air blower housing and output 905.

A hand grip 1002 provides an ergonomic support configured to be grasped by an operator's hand. A trigger 1004 facilitates activation and deactivation of a motor of an air blower housing and output 905 in response to engagement (and disengagement) of trigger 1004. Operator handle and brace 910 can further comprise a forearm brace 1012 and a forearm clasp 1014. Forearm brace 1012 can be rigidly secured to hand grip 1002 by an optional angular adjustment 1006. Optional angular adjustment 1006 can rigidly secure forearm brace 1012 to hand grip 1002 at a predetermined angle. In some embodiments, angular adjustment 1006 can optionally be loosened (*e.g.,* by loosening a set screw, or other fastening device) so that the predetermined angle between forearm brace 1012 and hand grip 1002 can be changed to a modified angle and rigidly resecured at the modified angle. Forearm clasp 1014 can fit snugly about an upper forearm of an operator whose hand is grasping hand grip 1002. Forearm clasp 1014 and forearm brace 1012 can facilitate transfer of force generated by air blower housing and output 905 along forearm brace 1012 to alleviate strain on an operator's hand at hand grip 1002, and improve operator comfort while operating air blower housing and output 905.

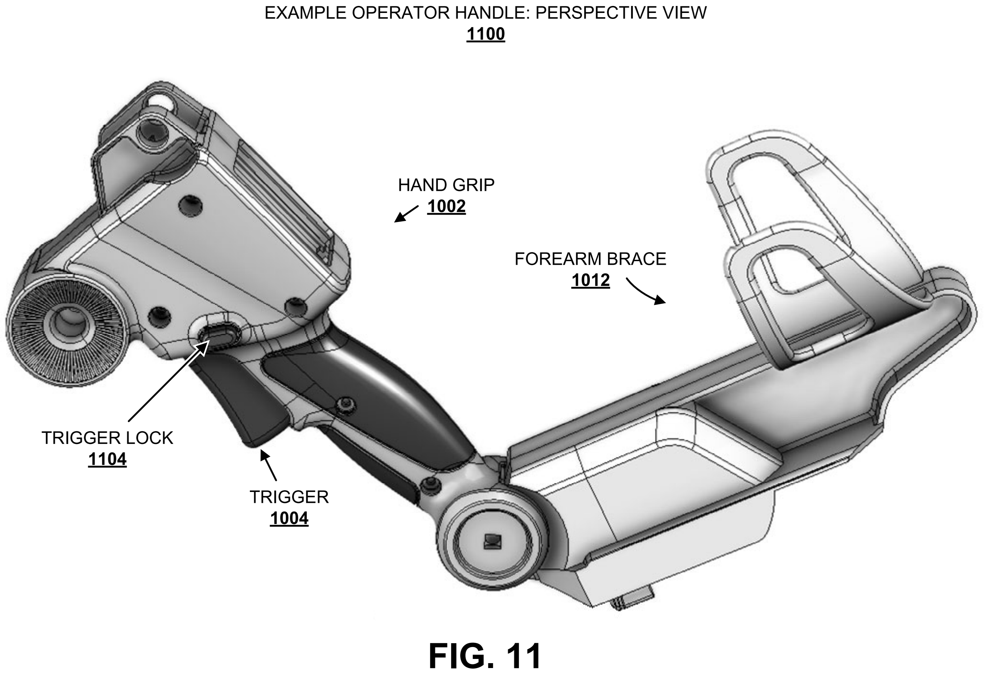

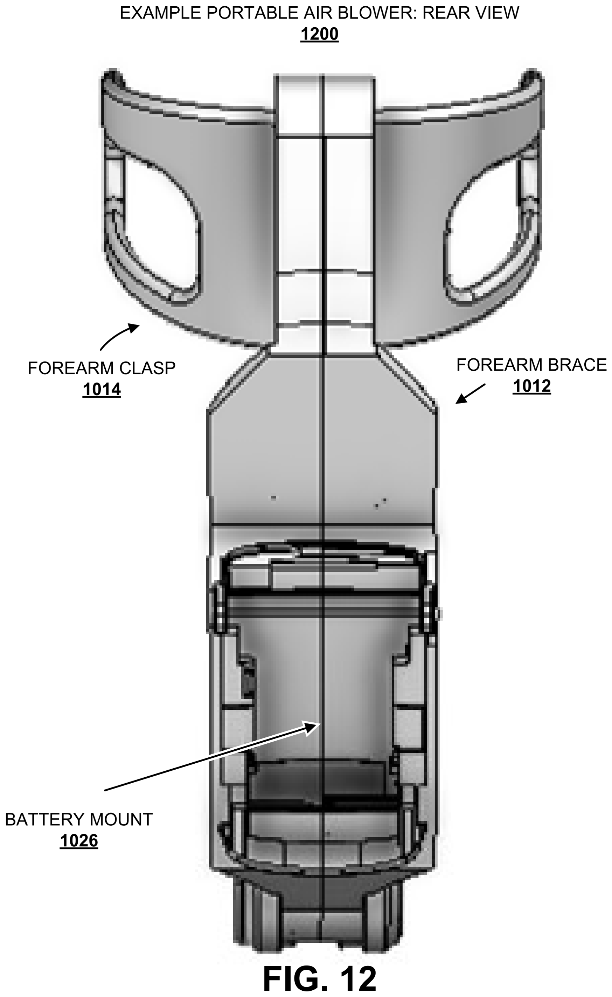

Figure 11 depicts a perspective view 1100 of operator handle and brace 910. Perspective view 1100 depicts a trigger lock 1104 that can be depressed by an operator's thumb to lock trigger 1004 in a depressed (or engaged/activated) position that activates a motor of air blower housing and output 905. Re-depressing trigger lock 1104 can release trigger 1004 from the depressed position to a non-depressed position that deactivates the motor of air blower housing and output 905. Trigger lock 1104 can be positioned on both sides of hand grip 1002 to enable ambidextrous thumb activation (e.g., with a right-hand thumb when an operator's right hand grasps hand grip 1002, and with a left-hand thumb when an operator's left hand grasps hand grip 1002). Figure 12 depicts a rear view 1200 of operator handle and brace 910. Rear view 1200 shows a battery mount 1026, which can physically receive and secure a rechargeable battery, and electrically contact the rechargeable battery to receive power for an electric motor of air blower housing and output 905.

In regard to the various functions performed by the above described apparatuses, components, machines, devices, and the like, the terms (including a reference to a "means") used to describe such apparatuses and components are intended to correspond, unless otherwise indicated, to any apparatus/component which performs the specified function of the described apparatus/component (*e.g.,* a functional equivalent), even though not structurally equivalent to the disclosed structure, which performs the function in the herein illustrated exemplary aspects of the embodiments.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

For instance, the diagrams included herein are described with respect to several air blower apparatus, fan housings, fan geometries and airflow outputs. It should be appreciated that such diagrams can include apparatuses, housings, *etc.,* specified therein, some of the specified apparatuses / housings / geometries / outputs, or additional apparatuses / housings / geometries / outputs not explicitly depicted but known in the art or reasonably conveyed to those of skill in the art by way of the context provided herein. Components of disclosed air blower apparatuses can also be implemented as sub-components of another disclosed component (*e.g.*, high air volume fan impeller 620 and high air speed fan impeller 630 can be integrated into a single impeller structure), whereas other components disclosed as sub-components can be separate components in various embodiments (*e.g.*, mechanical drive and rotation axis 610 can be embodied in multiple mechanical drives or multiple rotation axis, or both). Further, embodiments within a particular Figure of the present specification can be applied in part or in whole to other embodiments depicted in other Figures without limitation (*e.g.,* operator handle and brace 910 can be implemented with air blower apparatus 500 of Figure 5, or air blower apparatus 100 of Figure 1; housing interior 600 can be provided for air blower apparatus 500 or air blower apparatus 100, and so on), subject only to suitability to achieving a disclosed function or purpose as understood by one of skill in the art, and *vice versa.* Components of the disclosed architectures can also interact with one or more other components not specifically described herein but known by those of skill in the art.

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. Moreover, embodiments described in a particular drawing or group of drawings should not be limited to those illustrations. Rather, any suitable combination or subset of elements from one drawing(s) can be applied to other embodiments in other drawings where suitable to one of ordinary skill in the art to accomplish objectives disclosed herein, known in the art, or reasonably conveyed to one of ordinary skill in the art by way of the context provided in this specification. Where utilized, block diagrams of the disclosed embodiments or flow charts are grouped for ease of understanding. However, it should be understood that combinations of blocks, additions of new blocks, re-arrangement of blocks, and the like are contemplated in alternative embodiments of the present disclosure.

Based on the foregoing it should be understood that the examples and embodiments described herein are for illustrative purposes only and that various modifications or changes in light thereof will be suggested to persons skilled in the art.

## Claims

1. An air blowing apparatus, comprising:
a first fan coupled to a drive mechanism that defines an axis of rotation for the first fan;
a first fan housing enclosing the first fan and that defines a space within which the first fan rotates in response to a rotational force applied to the drive mechanism;
a motor coupled to the drive mechanism that, when activated, generates and applies the rotational force to the drive mechanism causing the first fan to rotate within the first fan housing;
an intake in fluid communication with the first fan housing for receiving air external to the air blowing apparatus into the first fan housing, the air interacting with the first fan, wherein rotation of the first fan within the first fan housing while in communication with the air generates first dynamic air;
a first output fluidly coupled with the first fan housing that receives the first dynamic air and directs the first dynamic air to a first blower exhaust port;
a second fan contained within a second fan housing in fluid communication with the intake for receiving second air external to the air blowing apparatus into the second fan housing, the second air interacting with the second fan, wherein rotation of the second fan within the second fan housing while in communication with the second air generates second dynamic air; and
a second output fluidly coupled with the second fan housing that receives the second dynamic air and directs the second dynamic air to a second blower exhaust port.

2. The air blowing apparatus of claim 1, wherein the second fan is coupled to the drive mechanism and both the first fan and the second fan rotate in response to the rotational force applied to the drive mechanism.

3. The air blowing apparatus of claim 1 or claim 2, wherein the motor is positioned at least in part within the intake and is physically adjacent to the air received into the intake.

4. The air blowing apparatus of any one of the preceding claims, wherein the first fan has a first fan blade length that is shorter than a second fan blade length of the second fan.

5. The air blowing apparatus of any one of the preceding claims, wherein the first fan has a first fan blade width that is wider than a second fan blade width of the second fan.

6. The air blowing apparatus of any one of the preceding claims, wherein the first fan housing has a first volume larger than a second volume of the second fan housing.

7. The air blowing apparatus of any one of the preceding claims, wherein the first dynamic air facilitates a first volumetric flow at the first output that is higher than a second volumetric flow at the second output facilitated by the second dynamic air.

8. The air blowing apparatus of claim 7, wherein the second volumetric flow at the second output has a higher air speed than the first volumetric flow at the first output.

9. The air blowing apparatus of any one of the preceding claims, wherein the motor is an electric motor, and wherein the air blowing apparatus comprises a rechargeable battery providing electric power to the electric motor.

10. The air blowing apparatus of any one of the preceding claims, further comprising a motor control that when engaged, activates the motor to generate and apply the rotational force to the drive mechanism.

11. The air blowing apparatus of claim 10, further comprising an operator handle rigidly secured to the air blowing apparatus and to which the motor control is mounted.

12. The air blowing apparatus of claim 11, further comprising a forearm brace secured to the operator handle that facilitates transfer of force generated by the air blowing apparatus in response to the rotation of the first fan and the rotation of the second fan to the forearm brace.

13. The air blowing apparatus of any one of the preceding claims, wherein:
the first output includes a first output surface area;
the second output includes a second output surface area; and
the first output surface area is larger than the second output surface area.

14. The air blowing apparatus of claim 13, wherein the first output surface area is more than two times larger than the second output surface area.

15. The air blowing apparatus of any one of the preceding claims, wherein both the first fan and the second fan rotate about the axis of rotation in response to the rotational force applied to the drive mechanism.
